# EUROPEAN PATENT APPLICATION

(11) **EP 4 201 845 A1**
(43) Date of publication of application: **28.06.2023**
(21) Application number: 22195037.1
(22) Date of filing: 12.09.2022
(51) Int. Cl.: B65G 13/04, B65G 13/06, B65G 13/10, B65G 21/06, B65G 39/12, B65G 47/54

(54) **DIVERTER FOR TRANSFERRING CONVEYOR**

(30) Priority: 24.12.2021 KR 20210187466
(71) Applicant: KC Robotech Co., Ltd, Gunsan-si, Jeollabuk-do 54004 (KR)
(72) Inventor: KIM, Dong Hwan, 33674 Chungcheongnam-do (KR)
(74) Representative: AWA Sweden AB

(57) **Abstract**

A diverter for a transfering conveyor includes first and second transfer roll groups (110a, 110b) consisting of a plurality of transfer rolls (110); a rotation drive part (120) for rotationally driving the transfer rolls of the first and second transfer roll groups; a turning variable part (140) which includes a modular horizontal stand (141) rotatably supporting a rotation pin (136) assembled with the roll bracket (111) through a hinge shaft (132), first and second upper gears (142 a,b) respectively provided on a plurality of vertical rotation pins corresponding to a plurality of transfer rolls of the first and second transfer roll groups, first and second rack gears (143 a,b) which are arranged to be reciprocally movable between a plurality of first and second upper gears arranged along the rotational drive shaft so as to be gear-coupled with a plurality of first and second upper gears, a pair of first and second lower gears that are selected from a plurality of transfer rolls of the first and second transfer roll groups and disposed at each lower end of a pair of vertical rotation pins corresponding to a pair of transfer rolls adjacent to each other with the rotational drive shaft interposed therebetween, and a turning motor configured to rotate driver gears, which are gear-coupled with one pair of lower gears among a pair of first and second lower gears that are gear-coupled through a transmission gear disposed between the pair of first and second lower gears, in the forward or reverse direction, so as to simultaneously turn the transfer rolls of the first and second transfer roll groups by a predetermined angle; and an exterior box having an inner space for arranging the first and second transfer roll groups, the rotation drive part and the turning variable part,

## Description

### CROSS-REFERENCE TO RELATED APPLICATION

This application claims priority to and the benefit of Korean Patent Application No. 10-2021-0187466, filed on December 24, 2021, the disclosure of which is incorporated herein by reference in its entirety.

### [Technical Field]

The present invention relates to a diverter installed on a conveyor for transferring a package, and more specifically to a diverter for a transferring conveyor which is capable of more stably performing the turning operation of a transport roll for changing the transfer direction of a package.

### [Background Art]

Generally, conveyor systems for transferring packages are systems configured to consecutively transfer and transport packages, which are various types of transfer target objects, at warehouses, logistics service companies, sites handling various packages and the like, and are divided into belt type, chain type and roller type conveyor systems for transferring packages.

The conveyor system for transferring a package classifies packages at sites, at which various types of packages are piled, according to types and sizes thereof, to store the packages at other sites and transport the packages to desired sites, or to transfer and transport the packages to pile the packages at specific sites for a predetermined time before the received package is released.

That is, when a conveying table such as a belt, a roller, a chain or the like is operated by the operation of a conveyor system for transferring a package, the operator places the package on the upper surface of the conveying table that rotations and operates such that the material placed on the conveyor is transferred and transported to the operator located on the other side of the conveyor system by a rotating conveyor.

However, in the case of the conveyor system for transferring a package, since the conveyer rotates and transfers the package from a starting point to an end point, that is, from one side to the other side, of the conveyor system in one direction, there are problems in that the work efficiency and productivity according to the logistics sorting work were lowered, because the operator must select and transport only the same type of packages or sort the various types of packages for each type one by one at the end point of the conveyor system.

Further, in the case in which the operator classifies the packages one by one according to the types thereof at the end point of the conveyor system for transferring a package, there are problems in that it is difficult to efficiently classify the packages and it is also inefficient due to incorrect classification work.

(Patent Document 1) KR10-2099107 B1

Patent Document 1 discloses a diverter for changing the transfer direction of a package, which includes a turning variable part which includes first and second upper gears provided on a plurality of vertical rotation pins corresponding to a plurality of transfer rolls of first and second transfer roll groups disposed along the rotation drive shaft, first and second lower gears rotatably supporting first and second connection gears, which are disposed between and gear-coupled to the first and second upper gears adjacent to each other along the rotation drive shaft, on the horizontal fixed plate and disposed on lower end portions of a pair of the vertical rotation pins corresponding to a pair of transfer rolls which are selected from the plurality of transfer rolls of the first and second transfer roll groups, adjacent to each other, and disposed with the rotation drive shaft interposed therebetween, and a turning motor configured to rotate drive gears gear-coupled to the first and second lower gears in the forward or reverse direction, and to simultaneously turn the transfer rolls of the first and second transfer roll groups by a predetermined angle.

However, in this conventional diverter, when any one of the plurality of first and second connection gears that are gear-coupled between the adjacent first and second upper gears is damaged or the gear teeth are damaged, malfunction may occur in that each transfer roll of the first and second transfer roll groups may not be turned by a predetermined angle in the same direction by transmitting the rotational driving force of the turning motor to the vertical rotation pin.

In addition, problems have occurred where it is very cumbersome and time-consuming to reassemble a plurality of connection gears in order to replace a plurality of first and second connection gears that are gear-coupled between the first and second upper gears adjacent to each other during maintenance of equipment with new gears.

In addition, when the width direction travel width of the first and second transfer roll groups is widened or narrowed due to the design change of the logistics system, it is difficult to install by extending or narrowing a plurality of transfer rolls in the width direction according to the design change.

### [Disclosure]

### [Technical Problem]

The present invention has been devised to solve the above problems, and an object of the present invention is to provide a diverter for a transferring conveyor, which delivers the driving force of a turning motor more stably to prevent malfunction of the transport roll and facilitates the separation and reassembly of components during equipment maintenance.

Another object of the present invention is to provide a diverter for a transferring conveyor that can easily perform the structural change according to the expansion and reduction of the number of transport rolls installed according to the design change of the logistics system.

The technical problems to be achieved in the present invention are not limited to the technical problems mentioned above, and other technical problems that are not mentioned will be clearly understood by those of ordinary skill in the art to which the present invention pertains from the description below.

### [Technical Solution]

According to an aspect of the present invention, provided is a diverter for a transferring conveyor, including first and second transfer roll groups consisting of a plurality of transfer rolls in which a roll shaft is rotatably assembled to a roll bracket; a rotation drive part which includes a rotational drive shaft circumscribed with the transfer rolls of the first and second transfer roll groups arranged on both left and right sides, and a rotary motor connected to one end of the rotational drive shaft through a power transmission part so as to rotate the transfer rolls of the first and second transfer roll groups; a turning variable part which includes a modular horizontal stand rotatably supporting a rotation pin assembled with the roll bracket through a hinge shaft, first and second upper gears respectively provided on a plurality of vertical rotation pins corresponding to a plurality of transfer rolls of the first and second transfer roll groups, first and second rack gears which are arranged to be reciprocally movable between a plurality of first and second upper gears arranged along the rotational drive shaft so as to be gear-coupled with a plurality of first and second upper gears, a pair of first and second lower gears that are selected from a plurality of transfer rolls of the first and second transfer roll groups and disposed at each lower end of a pair of vertical rotation pins corresponding to a pair of transfer rolls adjacent to each other with the rotational drive shaft interposed therebetween, and a turning motor configured to rotate driver gears, which are gear-coupled with one pair of lower gears among a pair of first and second lower gears that are gear-coupled through a transmission gear disposed between the pair of first and second lower gears, in the forward or reverse direction, so as to simultaneously turn the transfer rolls of the first and second transfer roll groups by a predetermined angle; and an exterior box having an inner space for arranging the first and second transfer roll groups, the rotation drive part and the turning variable part, wherein a driving force generated when the turning motor is operated is transmitted to the first and second gears that are gear-coupled with the first and second rack gears to simultaneously turn the plurality of transfer rolls to change a transfer direction of a package.

In this case, the diverter may further include a gear guide bar having a certain length in which gear guide grooves in which the first and second rack gears are assembled to be reciprocally movable forward and backward are recessed in both sides corresponding to the first and second upper gears, respectively, wherein the gear guide bar may be fixedly installed parallel to the rotational drive shaft on an upper surface of the modular horizontal stand.

In this case, the modular horizontal stand may include a central assembly plate provided with first and second upper gears that are gear-coupled with the first and second rack gears and assembled to the exterior box having first and second lower gears which are gear-coupled with the transmission gear, a pair of left and right connection assembly plates assembled to the exterior box to be disposed on both sides of the central assembly plate by having other first and second upper gears which are gear-coupled with the first and second racks, and a pair of left and right expansion assembly plates assembled to the exterior box to be disposed on each outside of the pair of left and right connection assembly parts by having other first and second upper gears which are gear-coupled with the first and second rack gears.

In this case, the modular horizontal stand may include assembly grooves respectively formed to be recessed in the outer rims of a pair of assembly plates facing and in contact with each other, and wherein a horizontal key having a certain length may be included that is inserted and disposed in assembly grooves that are combined facing each other so as to maintain a horizontal state when horizontally installing the assembly plates adjacent to each other inside the exterior box.

In this case, the turning variable part may include a backlash prevention plate in contact with each end of the first and second rack gears gear-coupled with the first and second upper gears at both ends of the modular horizontal stand, and an elastic body whose one end is in contact with the backlash prevention plate to elastically support.

### [Advantageous Effects]

According to the inverter for a transferring conveyor according to an exemplary embodiment of the present invention, since the transfer rolls of a pair of left and right first and second transfer roll groups which are circumscribed to the rotational drive shaft can be simultaneously turned and changed with fast response by a power transmission structure due to gear coupling, it is possible to increase work productivity by quickly changing the transfer direction of a package in accordance with the fast transfer speed of packages. Meanwhile, it is possible to easily perform the structural change of expanding by increasing the number of transfer rolls installed or reducing the number of installation according to the design change of the logistics system.

The effects of the present invention are not limited to the above-described effects, and it should be understood to include all effects that can be inferred from the configuration of the invention described in the detailed description or claims of the present invention.

### [Description of Drawings]

FIG. 1 is an overall perspective view illustrating the diverter for a transferring conveyor according to an exemplary embodiment of the present invention.
FIG. 2 is an exploded perspective view illustrating the diverter for a transferring conveyor according to an exemplary embodiment of the present invention.
FIG. 3 illustrates the diverter for a transferring conveyor according to an exemplary embodiment of the present invention, and a) is a top view, b) is a front view, and c) is a side view.
FIGS. 4a and 4b are perspective views illustrating a turning variable part applied to the diverter for a transferring conveyor according to an exemplary embodiment of the present invention.
FIG. 5 is an exploded perspective view illustrating an elastic support part applied to the diverter for a transferring conveyor according to an exemplary embodiment of the present invention.
FIGS. 6a and 6b are exploded perspective views illustrating a turning variable part and a modular horizontal stand applied to the diverter for a transferring conveyor according to an exemplary embodiment of the present invention.
FIG. 7 is a perspective view illustrating the separation state of a modular horizontal stand applied to the diverter for a transferring conveyor according to an exemplary embodiment of the present invention.
FIG. 8 is a configurational diagram in which a horizontal key and a backlash prevention plate are applied to a modular horizontal stand provided in the turning variable part of the diverter for a transferring conveyor according to an exemplary embodiment of the present invention.
FIGS. 9a and 9b are plan views illustrating the operating state of the diverter for a transferring conveyor according to an exemplary embodiment of the present invention.
FIGS. 10a and 10b are usage status diagrams illustrating the diverter for a transferring conveyor according to an exemplary embodiment of the present invention.

### [Modes of the Invention]

Hereinafter, with reference to the accompanying drawings, preferred exemplary embodiments in which a person of ordinary skill in the art to which the present invention pertains can easily practice the present invention will be described in detail. However, in the detailed description of the structural principle of the preferred exemplary embodiment of the present invention, if it is determined that the detailed description of a known function or configuration may unnecessarily obscure the gist of the present invention, the detailed description thereof will be omitted.

In addition, the same reference numerals are used throughout the drawings for parts having similar functions and functions.

In addition, throughout the specification, when a part is 'connected' with another part, it includes not only cases of being 'directly connected', but also cases of being 'indirectly connected' with another element interposed therebetween. In addition, 'including' a certain component does not exclude other components unless otherwise stated, but means that other components may be further included.

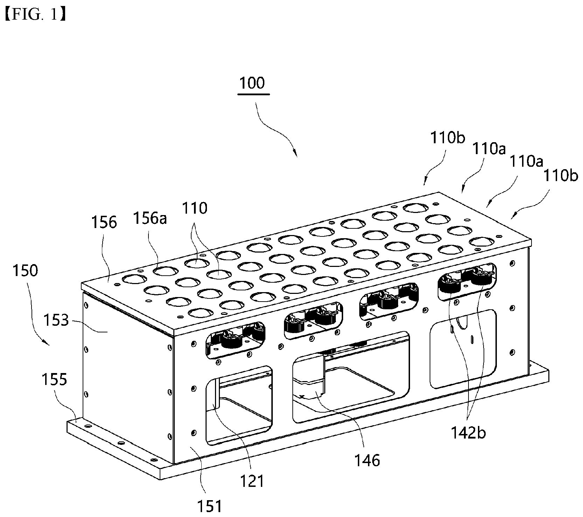

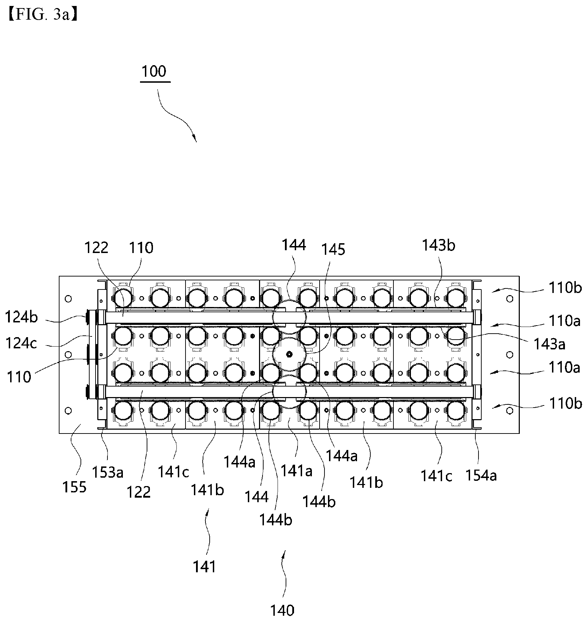

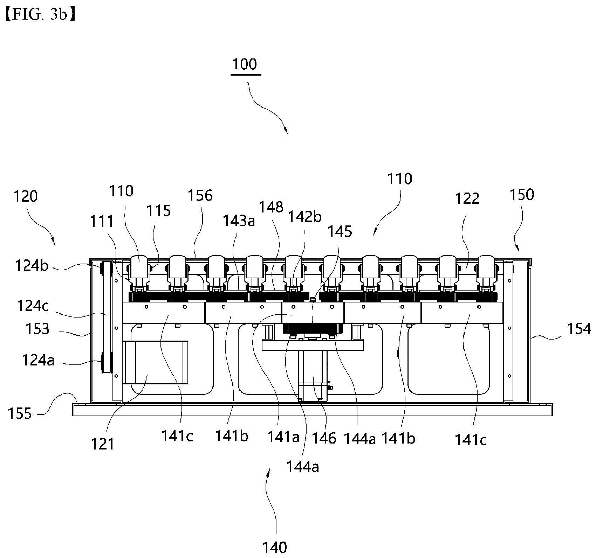

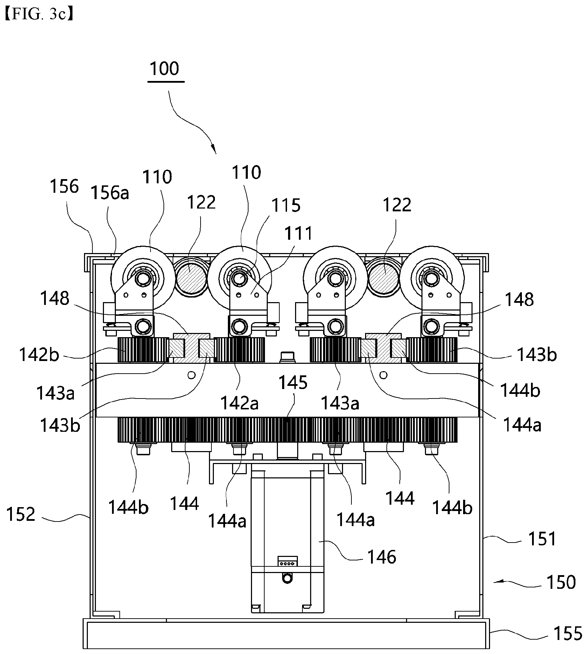

As illustrated in FIGS. 1, 2, 3a, 3b and 3c, the diverter 100 for a transferring conveyor according to a preferred exemplary embodiment of the present invention may include first and second transfer roll groups 110a, 110b consisting of a plurality of transfer rolls 110, which are installed on a conveyor that transfers a package, which is a material to be transferred such as a packaging box, so as to selectively switch the transfer direction of a package to any one side of an outlet branched conveyor 200b branched into at least two or more of packages supplied from an inlet conveyor 200a, a rotational drive part 120 for rotating a transfer roll to generate a package transfer force, an elastic support part 130 for elastically supporting the transfer roll and a turning variable part 140 for turning the transfer roll 110 to variably change the transfer direction of a package.

As illustrated in FIGS. 1, 2, 3a, 3b and 3c, the transfer rolls 110 provided in the first and second transfer roll groups 110a and 110b are assembled on a roll bracket 111 such that a roll shaft 115 is rotatable, and may consist of a substantially hollow cylindrical roll member whose outer surface is in contact with a package which is a material to be transferred.

The transfer roll 110 is rotatably assembled to a first assembly hole 112 formed to penetrate through the upper portion of the roll bracket 111 through both ends of the roll shaft 115 and a bearing member 115a, and may consist of a roll-shaped member whose outer surface is in contact with a package, which is a material to be transferred.

The transport roll 110 may be made of an elastic material such as a rubber material to increase transport efficiency by increasing the frictional force with the package and the rotational drive shaft during the transport of a package.

The roll bracket 111 is formed to penetrate a first assembly hole 112 through which both ends of a roll shaft 115 of the transfer roll 110 are assembled, and may consist of a roll support structure having a cross-section of approximately ' ⊏ ' that is opened to an upper portion by having a pair of left and right plate members formed to penetrate through a lower portion of a second assembly hole 113 through which both ends of a hinge shaft 132 to be described below are assembled.

The roll bracket 111 is connected to the upper end of a vertical rotation pin 136 through the hinge shaft 132 of an elastic support part 130 so as to be assembled to be rotatable about the hinge shaft 132 parallel to the roll shaft.

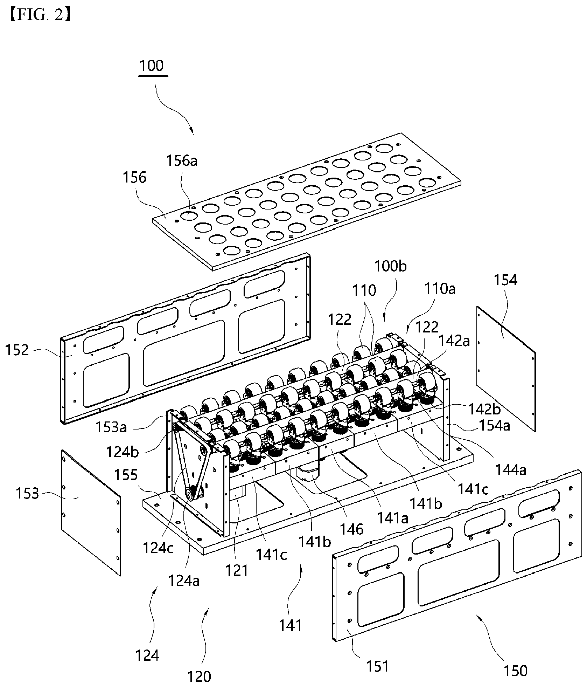

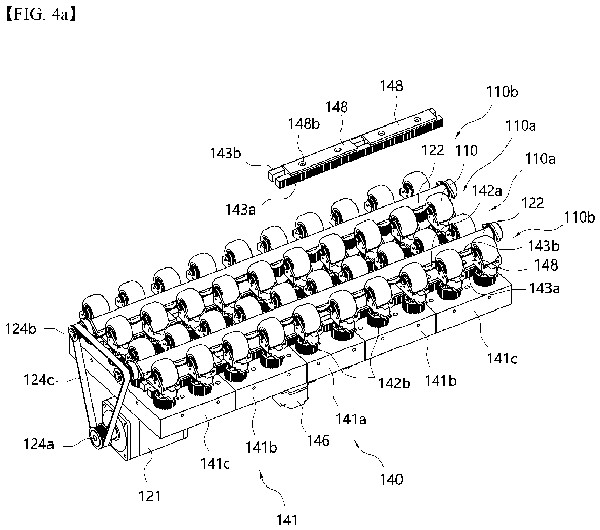

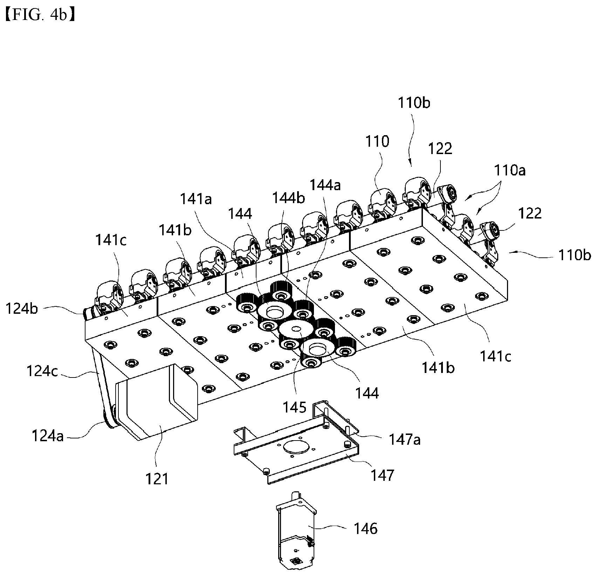

As illustrated in FIGS. 2, 3a, 3b, 3c, 4a and 4b, the rotation drive part 120 forcibly rotates a plurality of transfer rolls 110 provided in the first and second transfer roll groups 110a, 110b circumscribed with the package in the same direction at the same time to generate an external force that forcibly transfers a package, which is a material to be transferred, in one direction.

The rotation drive part 120 is provided with a rotational drive shaft 122 having a certain length that is circumscribed simultaneously with the outer surface of each transfer roll 110 provided in the first and second transfer roll groups 110a, 110b arranged on both left and right sides, and may include a rotary motor 121 connected through one end of the rotation drive shaft 122 and a power transmission part 124 so as to rotate and drive in one direction.

Herein, the first and second transfer roll groups 110a, 110b may consist of a plurality of transfer rolls respectively provided in a symmetrical structure on the left and right with respect to the rotational drive shaft so as to circumscribe the outer circumferential surface of one horizontal rotational drive shaft, and although the rotational drive shaft 122 is illustrated and described as being formed of a pair of shaft members by being horizontally arranged from each other at a predetermined interval, the present invention is not limited thereto, and it may be formed of a single shaft member.

The power transmission part 124 has a drive pulley 124a provided on the drive shaft of the rotary motor 121, has a driven pulley 124b provided on either end of both ends of the rotation drive shaft 122, and may include a belt member 124c, such as a timing belt, provided between the driving pulley 124a and the driven pulley 124b to transmit rotational power.

On the outer surface of the rotation drive shaft 122, a frictional force is generated upon contact with the transfer roll 110, and a coating layer such as a rubber material may be formed to increase the generated frictional force, or a friction generating groove such as a groove may be formed.

Accordingly, with the rotational driving force of the rotary motor 121 centered on the roll shaft 115, a plurality of transfer rolls 110 may be simultaneously rotationally driven in one direction by a rotational drive shaft circumscribing each transfer roll 110 of the first and second transfer roll groups 110a and 110b respectively arranged on both sides of the rotation drive shaft 122, and generate a conveying force for transferring a package mounted on the plurality of transfer rolls 110 in one direction.

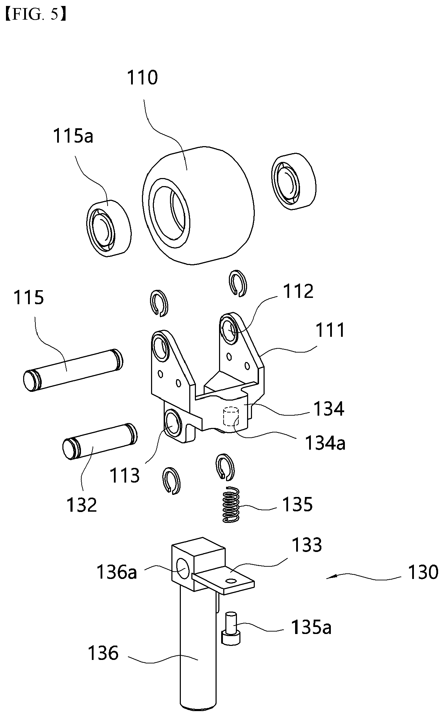

As illustrated in FIG. 5, the elastic support part 130 may include a vertical rotational pin 130 assembled through a second assembly hole 113 formed to penetrate through a lower portion of the roll bracket by being formed to penetrate an upper end of a hinge hole 136a corresponding to the second assembly hole 113, and a hinge shaft 132, and the vertical rotational pin may be provided to be assembled in a lower portion of the roll bracket.

An elastic body 135 whose lower end is caught and restrained by an extension bar 133 extending for a predetermined length outward from the upper end of the vertical rotation pin 136 made of a rectangular body is included, and the upper end, which is the other end of the elastic body 135, is caught and restrained by a protrusion 134 extending outward by a predetermined length from the roll bracket 111.

Herein, the upper end of the elastic body 135 made of a coil-shaped spring is inserted into the protrusion 134 to form a recessed groove 134a to be hooked, and it is preferable to form a locking means 135a such as a bolt member such that the lower end of the elastic body is hooked and connected to the extension bar 133.

It is preferable that the elastic body 135 is installed interchangeably between the protrusion 134 and the extension bar 133 such that the elastic body having different strengths of elasticity is easily replaced and installed in consideration of the close contact force between the transfer roll and the rotational drive shaft assembled to the roll bracket.

In addition, the vertical rotation pin 136 may be made of a rod member having a vertical circular cross-section having a predetermined length that is rotatably assembled to a connection hole formed to penetrate through a modular horizontal stand 141 in which a plurality of fixing rods are incorporated into a plate shape.

A plurality of vertical rotation pins 136 corresponding to each transfer roll of the first and second transfer roll groups 110a and 110b one-to-one are supported to be rotatable based on an imaginary vertical axis through a bearing member and a bushing member provided in a connection hole 149 of the modular horizontal stand which is horizontally fixed to the inside of the exterior box 150 to be described below.

Accordingly, the roll bracket assembled with the transfer roll is rotatably assembled around a horizontal hinge shaft assembled with the block body, and by the elastic force of the elastic body, the roll bracket is constantly pressed toward the rotational drive shaft such that since the contact state with the rotation drive shaft can be constantly and stably maintained regardless of the change in outer diameter due to the surface abrasion of the transfer roll, slip occurrence at the contact area between the rotation drive shaft and the transfer roll is prevented, and the contact area therebetween is reduced, and thus, it ensures stable high-speed rotational operation of the swiveling transfer roll for direction change.

At the same time, the roll bracket assembled with the transfer roll is rotatably assembled about the vertical axis, which is the vertical hinge pin, while maintaining the contact state between the transfer roll and the rotational drive shaft such that it swivels together with the transfer roll about an imaginary vertical axis which is orthogonal to the rotation drive shaft.

As illustrated in FIGS. 2, 3a, 3b, 3c, 4a, 4b, 6a and 6b, the turning variable part 140 simultaneously turns the transfer rolls 110 of the first and second transfer roll groups 110a, 110b arranged on both sides of the rotation drive shaft 122 and rotated by a predetermined angle (θ) such that it is possible to change the transfer direction of transferring a package on the conveyor to a linear direction (A) or a variable direction (B).

The turning variable part 140 may include a modular horizontal stand 141 fixedly installed inside the exterior box 150 so as to rotatably support the vertical rotation pin 136 to which the roll bracket 111 and the upper end are coupled.

The modular horizontal stand 141 may be assembled with a vertical rotation pin 136 through a support member such as a bearing member 149a and a bushing member 149b assembled in a plurality of connection holes 149 that are formed to penetrate through a predetermined interval.

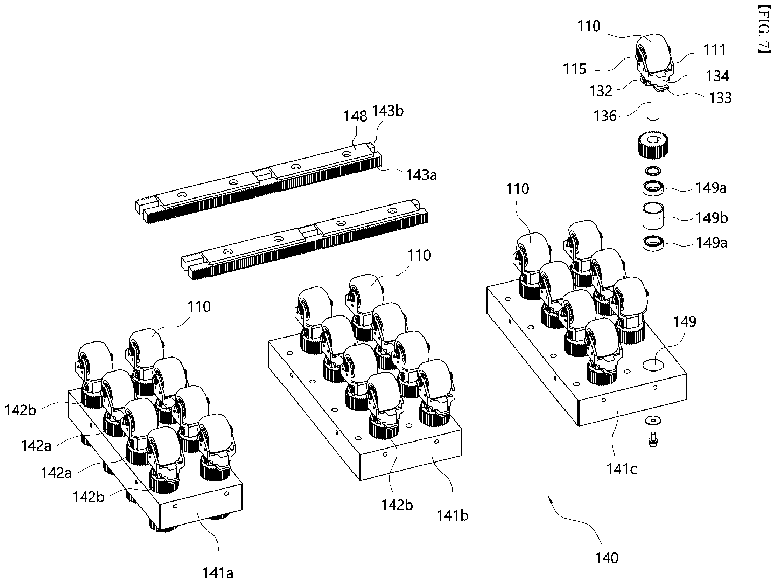

Herein, as illustrated in FIG. 7, the modular horizontal stand 141 may include a plurality of assembly plates 141a, 141b, 141c having a plurality of connection holes 149 formed to penetrate in the upper surface corresponding to each transfer roll of the first and second transfer roll groups 110a and 110b such that a plurality of assembly plates may be detachably assembled inside the exterior box 150 to have a substantially rectangular plate shape.

First and second upper gears 142a and 142b may be provided for each of a plurality of vertical rotation pins 136 corresponding to the plurality of transfer rolls of the first and second transfer roll groups arranged along the rotational drive shaft 122, and may be arranged to be reciprocally movable in a direction parallel to the rotational drive shaft between a plurality of first and second upper gears 142a, 142b arranged along the rotational drive shaft 122 to include first and second rack gears 143a, 143b that are respectively gear-coupled to each of the plurality of first and second upper gears 142a, 142b.

It may include a gear guide bar having a certain length in which a gear guide groove 148a in which the first and second rack gears 143a and 143b are assembled to be reciprocally movable forward and backward are respectively recessed in both side surfaces corresponding to the first and second upper gears., and the gear guide bar 148 may be fixedly installed in parallel with the rotational drive shaft 122 by a fastening member 148b on the upper surface of the modular horizontal stand 141.

It may include a pair of first and second lower gears 144a, 144b, which are selected from the plurality of first and second transfer roll groups 110a, 110b to have the rotation drive shaft 122 in between, and provided at the lower ends of a pair of vertical rotation pins 136 and the lower ends of the other pair of vertical rotation pins respectively corresponding to a pair of transfer rolls and the other transfer rolls adjacent to each other.

The first and second lower gears 144a, 144b are gear members that are assembled at the lower end of the vertical rotation pin 136 exposed through the connection hole formed in a central assembly plate from the top to the bottom among a plurality of assembly plates constituting the modular horizontal stand 141, and the vertical rotation pin in which the first and second gears are assembled may be formed of a pin member extending relatively long compared to the length of other vertical rotation pins.

Between the pair of first lower gears 144a and the pair of second lower gears 144b, it may include a transmission gear 144 to which the gear teeth formed on the outer circumferential surface are gear-coupled, a driving gear 145 which is gear-coupled with a pair of lower gears on one side of a pair of first and second lower gears that are gear-coupled with the transmission gear 144, and a turning motor 146 having the drive gear at the front end of the drive shaft and rotating in the forward or reverse direction.

The turning motor 146 may be installed perpendicularly to a motor fixing plate 147 provided with a connecting assembly plate 141b and a bracket 147a that are assembled on the outside of the central assembly plate 141a among a plurality of assembly plates constituting the modular horizontal stand 141 as a medium.

The gear shaft of the transmission gear 144 may be rotatably assembled and provided on the lower surface of the central assembly plate 141a corresponding to the middle of the length of the modular horizontal stand 141.

A plurality of vertical rotation pins 136 coupled to the first and second upper gears 142a and 142b are disposed between the first and second upper gears arranged along the first and second transfer roll groups, and are all rotated in the same direction by the first and second rack gears 143a, 143b that are gear-coupled thereto.

Accordingly, while the rotational driving force is transmitted to the first and second lower gears provided in the central assembly plate through the driving gear during the forward or reverse rotational driving of the turning motor, when the first and second lower gears are rotated by a certain angle in the forward or reverse direction, since the vertical rotation pins coupled to the first and second lower gears are rotated in the same direction, each transfer roll of the first and second transfer roll groups, which are arranged on both sides of the rotational drive shaft by the first and second rack gears that are gear-coupled between the first and second upper gears provided on the vertical connecting pins corresponding to each transfer roll of the first and second transfer roll groups, is rotated at a certain angle simultaneously with the vertical rotation pin.

In this case, the rotation range of the certain angle of the transfer roll 110 may be adjusted by the size of the rotation angle of the driving gear rotated by the turning motor.

In addition, since the first and second transfer roll groups 110a, 110b having a plurality of transfer rolls 110 are provided on both sides of the rotational drive shaft 122 to be simultaneously in contact with the outer surface of the rotation drive shaft and a plurality of transfer rolls are simultaneously turned in the same direction by the gear coupling of the first and second upper and lower gears 142a, 142b, 144a, 144b and the first and second rack gears 143a, 143b such that it is possible to change the transfer direction of a package while rotating a plurality of transfer rolls by one rotating motor 121 and one turning motor 146, the overall configuration may be simplified and the number of components may be reduced to reduce the manufacturing cost, while the efficiency of moving a package may be increased by changing the direction of a large number of packages in a straight or variable direction.

Meanwhile, as illustrated in FIGS. 1, 2, 3a, 3b and 3c, the diverter 100 according to an exemplary embodiment of the present invention may include an approximately hexahedral exterior box 150 consisting of front and rear plates 151, 152 coupled with a pair of left and right side plates 153, 154 to form an internal space having a certain size in which a plurality of transfer rolls 110, a rotation driving part 120, an elastic support part 130 and a turning variable part 140 provided in the first and second transfer roll groups are disposed.

The exterior box 150 may include a cover plate 156 covering the open top of 150, which is provided with a plurality of exposure holes 156a that are formed to penetrate through approximately circular holes at each position corresponding to the transfer roll so as to expose a part of the outer surface of the transfer roll 110 to the outside.

In addition, it may include internal vertical plates 153a, 154a, in which both ends of the rotation drive shaft 122 are rotatably supported, inside the side plates 153, 154 of the exterior box 150, and may include a bottom plate 155 for sealing the exposed lower portion of the exterior box.

The modular horizontal stand 141 consisting of a plurality of assembly plates 141a, 141b, 141c may be detachably assembled on the inner vertical plates 153a, 154a and the front and rear plates 151, 152 of the exterior box 150.

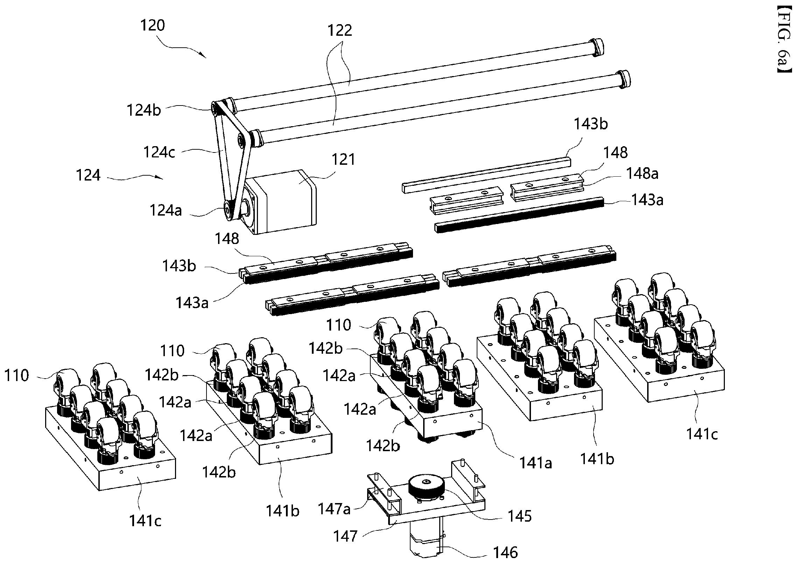

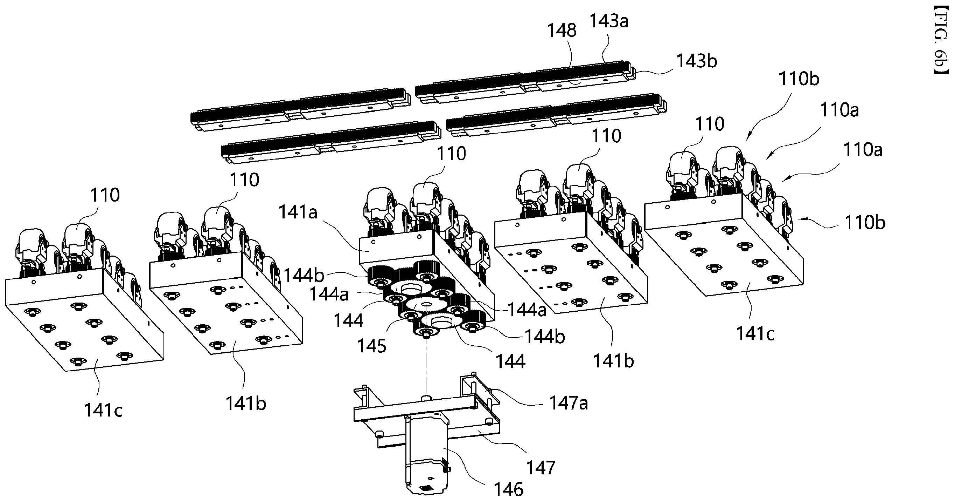

In addition, as illustrated in FIGS. 6a, 6b and 7, the modular horizontal stand 141 may be provided with the first and second upper gears 142a, 142b that are gear-coupled with the first and second rack gears 143a, 143b, and may include a central assembly plate 141 which is provided with the first and second lower gears 144a,144b that are gear-coupled with the transmission gear 144 at the lower portion such that both ends of the front and rear plates 151,152 are detachably assembled by a plurality of fastening members, a pair of left and right connection assembly plates 141b which are provided with other first and second upper gears that are gear-coupled with the first and second rack gears at the upper portion such that both ends of the front and rear plates 151, 152 are detachably assembled by a plurality of fastening members so as to be disposed on both sides of the central assembly plate, and a pair of left and right expansion assembly plates 141c which are provided with other first and second upper gears that are gear-coupled with the first and second rack gears at the upper portion such that both ends of the front and rear plates 151, 152 are detachably assembled by a plurality of fastening members so as to be disposed on the outside of the pair of left and right connection assembly plates.

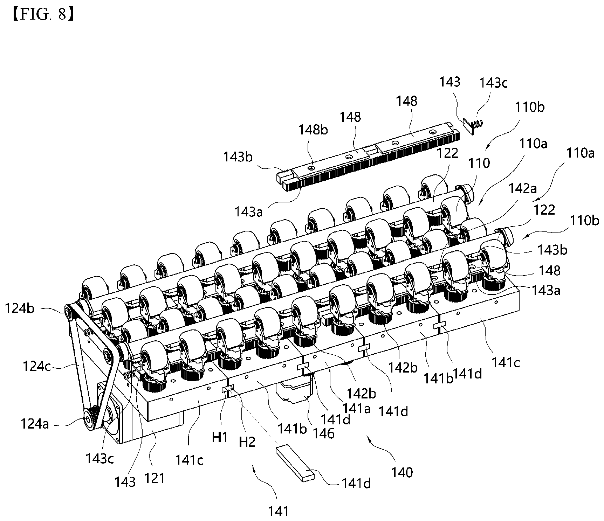

FIG. 8 is a configurational diagram in which a horizontal key and a backlash prevention plate are applied to a modular horizontal stand provided in the turning variable part of the diverter for a transferring conveyor according to an exemplary embodiment of the present invention.

The modular horizontal stand 141 may include a central assembly plate 141a having first and second lower gears 144a and 144b that are gear-coupled with the transmission gear 144 at the lower portion, a pair of left and right connection assembly plates 141b that are disposed on both sides of the central assembly plate, and a pair of left and right expansion assembly plates 141c that are disposed on the outside of each of the pair of left and right connection assembly plates such that a plurality of assembly plates may be assembled in an approximately rectangular plate shape in the inner space of the exterior box.

As illustrated in FIG. 8, a plurality of assembly plates 141a, 141b, 141c that are assembled on a horizontal line to configure the modular horizontal stand 141 may include assembly grooves (H1, H2) respectively recessed in the outer rims of a pair of assembly plates facing each other, and horizontal keys 141d having a certain length which are inserted and disposed in the assembly grooves (H1, H2) that are combined to face each other so as to maintain a horizontal state during the horizontal installation of the assembly plates adjacent to each other inside the exterior box 150.

In the process of installing the modular horizontal stand 141 inside the exterior box by individually fixing a plurality of assembly plates consisting of the central assembly plate, the connection assembly plate and the expansion assembly plate to the front and rear plates 151, 152 constituting the exterior box 150 by means of a fastening member, since it is possible to maintain the horizontal state of the assembling plates adjacent to each other by the horizontal key 141d on an approximately rectangular cross-section inserted into the assembly grooves (H1, H2) that are combined to face each other, the horizontal installation of the assembly plates on the front and rear plates 151, 152 may be performed more stably.

In addition, as illustrated in FIG. 8, the turning variable part 140 may include a backlash prevention plate 143 which is in contact with each end of the first and second rack gears 143a, 143b that are gear-coupled with the first and second upper gears 142a, 142b at both ends of the modular horizontal stand 141, and an elastic body 143c such as a coil spring whose one end is in contact with the backlash prevention plate and the other end is fixed to both sides of the exterior box to elastically support the backlash prevention plate.

The elastic body 143c may be formed of an elastic member such as a coil spring which is installed to be fixed to the inner vertical plates 153a, 154a of the exterior box corresponding to both ends of the modular horizontal stand 141.

Accordingly, since the first and second rack gears are elastically supported toward the center of the modular horizontal stand by the backlash prevention plate such that the tooth surfaces formed on the outer circumferential surfaces of the first and second upper gears and the tooth surfaces formed on one side of the first and second rack gears are always maintained to be in contact so as to fundamentally prevent the backlash phenomenon in which a gap is generated between the gear-engaged teeth surfaces, the operation of changing the rotation of the transfer roll to change the transfer direction of a package may be performed stably without generating noise due to backlash by turning the roll shaft of the transfer roll by a certain angle by the forward and backward reciprocating linear movement of the first and second rack gears.

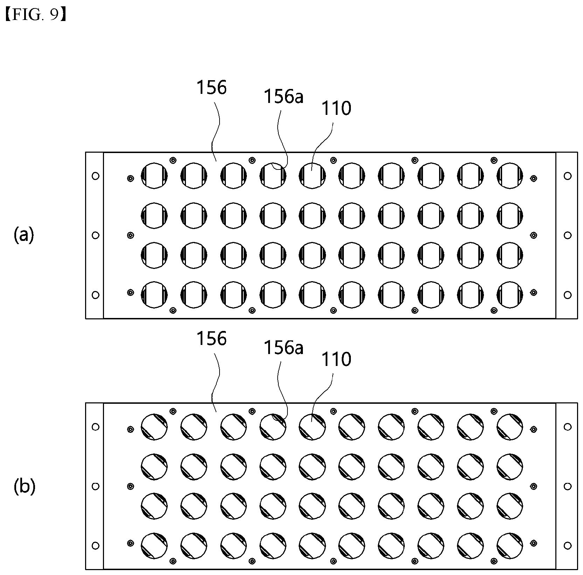

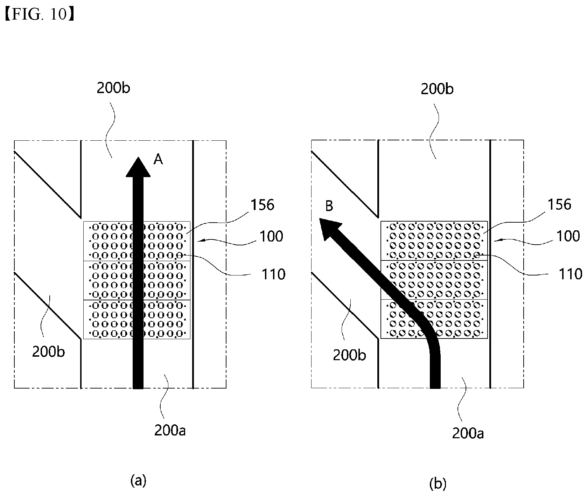

FIGS. 9a and 9b are plan views illustrating the operating state of the diverter for a transferring conveyor according to an exemplary embodiment of the present invention, and FIGS. 10a and 10b are usage status diagrams illustrating the diverter for a transferring conveyor according to an exemplary embodiment of the present invention.

When the diverter 100 for a transferring conveyor having the above configuration is driven by rotation of the rotary motor 121, a plurality of transport rolls 110 provided in the first and second transport roll groups 110a, 110b are circumscribed with the rotational drive shaft 122, the plurality of transfer rolls generate a conveying force for conveying a package mounted on the transfer roll in one direction while rotating in the meshing direction.

In this case, since the roll shaft 115 of the transfer roll 110 is arranged in parallel with the rotational driving shaft 122, the package delivered from the inlet conveyor 200a is conveyed in the linear direction (A).

In addition, the roll bracket 111 to which the transfer roll 110 is assembled is rotatably assembled around a hinge shaft 132, and since the transfer roll externally facing the rotational drive shaft is elastically supported by the elastic force of the elastic body 135 provided between the extension bar 133 and the protrusion 134, the package may be transferred by rotating the transfer roll at a speed corresponding to the rotational speed of the rotation drive shaft, while stably maintaining the contact state with the rotation drive shaft regardless of the change in outer diameter due to the surface abrasion of the transfer roll.

In such a state, if the transfer direction of a package is changed, when the driving gear is rotated by a certain angle by the rotational operation of the turning motor 146, the first and second lower gears that are gear-coupled with the driving gear under the central assembly plate of the modular horizontal stand rotate by a certain angle in the same direction, and at the same time, a pair of vertical rotation pins having the first and second lower gears are also rotated by a certain angle in conjunction therewith.

Successively, since a plurality of vertical rotation pins corresponding to the transfer rolls of the first and second transfer roll groups on the upper part of the modular horizontal stand are rotated by a certain angle in the same direction by the first and second rack gears that are disposed between the first and second upper gears arranged along the rotational drive shaft and are gear-coupled, the roll shaft of the transfer roll which is arranged in parallel with the rotational drive shaft 122 may be turned b a certain angle (θ).

Accordingly, it is possible to quickly change the conveying direction of the package lifted and conveyed in contact with the transfer roll 110 from the linear direction (A) to the variable direction (B).

Herein, since the rotational variableness of the transfer roll 110 is made in a state where the outer surface of the transfer roll and the outer circumferential surface of the rotational drive shaft are in elastic contact with each other by the elastic force of the elastic body 135, as the contact position of the outer surface of the transfer roll that is in contact with the forward positioned rotation drive shaft is changed, the contact area between the transfer roll and the rotation drive shaft is reduced as in prior art, the adhesion and frictional force are reduced, and as a result, it is possible to prevent the lowering of the transfer speed of a package.

That is, since the outer surface of the transfer roll, which is variable in turning, and the outer surface of the rotational drive shaft positioned in the forward position can always maintain a constant close adhesion and contact state by the elastic force of the elastic body, even in a state where the transfer roll is variably turned, the package may be transferred while being rotated at a speed corresponding to the rotational speed of the rotation drive shaft.

In addition, even when the outer diameter is reduced due to the surface abrasion of the transfer roll, by the elastic force of the elastic body, the close contact state between the transfer roll and the rotational drive shaft is constantly maintained, and the transfer of a package may be stably performed without lowering the transfer speed of a package while constantly maintaining a close contact state between the transport roll and the rotation drive shaft.

In addition, when the driving gear, the first and second upper and lower gears and the first and second rack gears are returned to their original states by the return operation of the turning motor 146, the transfer roll 110 may be returned to its initial state by the return operation of the vertical rotation pin 136 interlocking therewith such that the transfer of a package may be easily and quickly returned from the variable direction (B) to the linear direction (A).

Although the exemplary embodiments of the present invention have been described, the spirit of the present invention is not limited by the exemplary embodiments presented herein, and those skilled in the art who understand the spirit of the present invention can easily propose other exemplary embodiments by adding, changing, deleting or modifying components within the scope of the same spirit, but it can be said that this will also fall within the scope of the present invention.

**[Explanation of Reference Numerals]**

| | | | |
|---|---|---|---|
| 110a, 119b: | First and second transfer roll groups | | |
| 110: | Transfer roll | | |
| 111: | Roll bracket | 112: | First assembly hole |
| 113: | Second assembly hole | 115: | Roll shaft |
| 120: | Rotation drive part | 121: | Rotary motor |
| 122: | Rotation drive shaft | 124: | Power transmission part |
| 130: | Elastic support part | 132: | Hinge pin |
| 133: | Extension bar | 134: | Protrusion |
| 135: | Elastic body | 136: | Vertical rotation pin |
| 140: | Turning variable part | 141: | Modular horizontal stand |
| 141a: | Central assembly plate | 141b: | Connection assembly plate |
| 141c: | Expansion assembly plate | | |
| 142a, 142b: | First and second upper gears | | |
| 143a, 143b: | First and second rack gears | | |
| 144a, 144b: | First and second lower gears | | |
| 145: | Drive gear | 144: | Transmission gear |
| 146: | Turning motor | 150: | Exterior box |
| 151, 152: | Front and rear plates | 153, 154: | Side plates |
| 155: | Bottom plate | 156: | Cover plate |

## Claims

1. A diverter for a transferring conveyor, comprising:
first and second transfer roll groups consisting of a plurality of transfer rolls in which a roll shaft is rotatably assembled to a roll bracket;
a rotation drive part which comprises a rotational drive shaft circumscribed with the transfer rolls of the first and second transfer roll groups arranged on both left and right sides, and a rotary motor connected to one end of the rotational drive shaft through a power transmission part so as to rotate the transfer rolls of the first and second transfer roll groups;
a turning variable part which comprises a modular horizontal stand rotatably supporting a rotation pin assembled with the roll bracket through a hinge shaft, first and second upper gears respectively provided on a plurality of vertical rotation pins corresponding to a plurality of transfer rolls of the first and second transfer roll groups, first and second rack gears which are arranged to be reciprocally movable between a plurality of first and second upper gears arranged along the rotational drive shaft so as to be gear-coupled with a plurality of first and second upper gears, a pair of first and second lower gears that are selected from a plurality of transfer rolls of the first and second transfer roll groups and disposed at each lower end of a pair of vertical rotation pins corresponding to a pair of transfer rolls adjacent to each other with the rotational drive shaft interposed therebetween, and a turning motor configured to rotate driver gears, which are gear-coupled with one pair of lower gears among a pair of first and second lower gears that are gear-coupled through a transmission gear disposed between the pair of first and second lower gears, in the forward or reverse direction, so as to simultaneously turn the transfer rolls of the first and second transfer roll groups by a predetermined angle; and
an exterior box having an inner space for arranging the first and second transfer roll groups, the rotation drive part and the turning variable part,
wherein a driving force generated when the turning motor is operated is transmitted to the first and second gears that are gear-coupled with the first and second rack gears to simultaneously turn the plurality of transfer rolls to change a transfer direction of a package.

2. The diverter of claim 1, further comprising a gear guide bar having a certain length in which gear guide grooves in which the first and second rack gears are assembled to be reciprocally movable forward and backward are recessed in both sides corresponding to the first and second upper gears, respectively,
wherein the gear guide bar is fixedly installed parallel to the rotational drive shaft on an upper surface of the modular horizontal stand.

3. The diverter of claim 1, wherein the modular horizontal stand comprises a central assembly plate provided with first and second upper gears that are gear-coupled with the first and second rack gears and assembled to the exterior box having first and second lower gears which are gear-coupled with the transmission gear, a pair of left and right connection assembly plates assembled to the exterior box to be disposed on both sides of the central assembly plate by having other first and second upper gears which are gear-coupled with the first and second racks, and a pair of left and right expansion assembly plates assembled to the exterior box to be disposed on each outside of the pair of left and right connection assembly parts by having other first and second upper gears which are gear-coupled with the first and second rack gears.

4. The diverter of claim 1, wherein the modular horizontal stand comprises assembly grooves respectively formed to be recessed in the outer rims of a pair of assembly plates facing and in contact with each other, and
wherein a horizontal key having a certain length is included that is inserted and disposed in assembly grooves that are combined facing each other so as to maintain a horizontal state when horizontally installing the assembly plates adjacent to each other inside the exterior box.

5. The diverter of claim 1, wherein the turning variable part comprises a backlash prevention plate in contact with each end of the first and second rack gears gear-coupled with the first and second upper gears at both ends of the modular horizontal stand, and an elastic body whose one end is in contact with the backlash prevention plate to elastically support.
